# EUROPEAN PATENT SPECIFICATION

(11) **EP 0 655 613 B1**
(45) Date of publication and mention of the grant of the patent: **17.03.1999**
(21) Application number: 94118784.1
(22) Date of filing: 29.11.1994
(51) Int. Cl.: G01J 5/04

(54) **Temperature measuring device**
Temperaturmessgerät
Appareil pour mesurer une température

(30) Priority: 30.11.1993 JP 299530/93
(43) Date of publication of application: 31.05.1995
(73) Proprietor: NKK CORPORATION, Tokyo 100 (JP)
(72) Inventor: Takayama, Takamitsu, c/o Intellectual Prop. Dept., Kawasaki-ku, Kawasaki 210 (JP); Yamanaka, Zenkichi, c/o Intellectual Prop. Dept., Kawasaki-ku, Kawasaki 210 (JP); Yamada, Yoshiro, c/o Intellectual Prop. Dept., Kawasaki-ku, Kawasaki 210 (JP); Kaneda, Yasushi, c/o Intellectual Prop. Dept., Kawasaki-ku, Kawasaki 210 (JP)
(74) Representative: Füchsle, Klaus, Dipl.-Ing.

(56) References cited:
- DE-A- 1 648 246
- FR-A- 1 574 054
- FR-A- 2 289 888
- JP-A- 6 058 816
- US-A- 4 093 193
- PATENT ABSTRACTS OF JAPAN vol. 17, no. 170 (P-1515) 31 March 1993 & JP-A-04 329 323 (KAWASAKI STEEL) 18 November 1992
- PATENT ABSTRACTS OF JAPAN vol. 12, no. 313 (P-749) 25 August 1988 & JP-A-63 081 264 (JAPAN VILENE CO) 12 April 1988
- PATENT ABSTRACTS OF JAPAN vol. 8, no. 33 (P-254) 14 February 1984 & JP-A-58 189 527 (NIPPON KOKAN) 5 November 1983
- PATENT ABSTRACTS OF JAPAN vol. 17, no. 522 (P-1616) 20 September 1993 & JP-A-05 142 049 (NKK) 8 June 1993

## Description

### BACKGROUND OF THE INVENTION

### 1. Field of the Invention

The present invention relates to a temperature measuring device, and more particularly to a structure of the temperature measuring device.

### 2. Description of the Related Arts

In a continuous casting process, for example, accurate measurement of temperature and surface level of molten steel during casting is necessary for improving the product quality and the production yield. Conventional technology for measuring the temperature of molten steel in a tundish and a mold prepares a solidification chamber inside of a carbon sleeve to introduce the molten steel, and determines the temperature in the solidification chambre by a contact thermometer of a consumable immersion thermocouple or a thermocouple covered with a ceramic protective tube.

The consumable immersion thermocouple degrades after only one measurement cycle because it directly contacts the molten steel. Therefore, a probe to measure the temperature is detachable at the tip of the thermometer, and the tip probe is replaced in every measurement. Since such an expensive probe is discarded at each measurement, increase of the number of measurement is difficult.

In the case that a thermocouple is covered with a ceramic tube, the thermocouple does not contact directly with the molten steel. Consequently, a continuous measurement is possible. In this case, however, the durability of ceramic protective tube has a limitation because of heat shock and erosion caused by slag. As a result, an expensive protective tube is durable only for 50 to 100 hrs., , and repeated use for a long period is impossible.

As a means to solve the problems above described, a consumable temperature measuring technology was introduced, which technology uses an optical fiber immersing into a high temperature molten metal, receives the radiation light emitted from the molten metal to the optical fiber, and measures the intensity of the radiation light using a photo-electric conversion element mounted at the other end of the optical fiber to determine the temperature of the molen metal. For example, Unexamined Japanese Patent Publication No. 62-19727 is referred.

To precisely measure the temperature of molten metal, however, it is necessary to stably immerse the optical fiber to some depth into the molten metal. The technology disclosed in the above patent publication gives a weak strength of optical fiber. In the case that the optical fiber is covered with an ordinary material such as TEFLON (trade mark), the covering material catches fire when the optical fiber approaches the surface of the molten metal, and the core of the optical fiber exposes to significantly reduce its strength. As a result, the optical fiber easily snaps at the immersion into the molten metal, which makes it difficult to immerse the optical fiber into the molten metal. Therefore, that type of optical fiber cannot be immersed into a molten metal to a depth necessary to determine accurately the inside temperature of the molten metal.

Another technology to measure a temperature at a deep zone using a double-covered optical fiber is disclosed in Unexamined Japanese Patent Publication No. 6-58816. The disclosure deals with a metallic tube which is covered with an insulation coating to prolong the melt-out time of the optical fiber owing to the presence of the insulation coating. Nevertheless, the amount of melt-loss is still large, and further prolongation of life has been wanted from the standpoint of cost. In addition, ordinary insulation materials are insufficient in their heat resistance and are unable to immerse stably into molten metal. At this point also, an optical fiber having a covering with better insulation property has been waited.

From DE-A-1 648 246 an insulating tube made of cardboard is known for use in temperature measurement of molten metal. Further, in JP-A-58 189 527 a tube made of alumina graphite is used together with an optical fibre in a device for measuring the temperature of molten metal.

### SUMMARY OF THE INVENTION

It is an object of the present invention to provide a temperature measuring device wherein a temperature measurement for a long period and with high accuracy is ensured.

To attain the above-mentioned object, the present invention provides a temperature measuring device, comprising:
(a) an optical fiber;
(b) a metallic protective tube for covering the optical fiber;
(c) a heat insulation coating for covering the protective tube, the optical fiber being covered with the protective tube and the heat insulation coating to form a double-covered optical fiber, and a tip of the double-covered optical fiber being a temperature measuring element; and
(d) said heat insulation coating containing particles as an additive having a melting point higher than a temperature of a molten metal being measured.

### BRIEF DESCRIPTION OF THE DRAWINGS

Fig. 1 shows a cross sectional view of a temperature measuring device of the present invention;
Fig. 2 shows a cross sectional view of the temperature measuring device under a measuring state of the present invention;
Fig. 3 shows a cross sectional view of the temperature measuring device under another measuring state of the present invention;
Fig. 4 illustrates a schematic diagram of temperature measuring device using a double-covered optical fiber of the present invention;
Fig. 5 is a frequency distribution showing a melt-loss in the case of an ordinary insulation coating containing no carbon particle;
Fig. 6 is a frequency distribution showing a melt-loss in the case of an insulation coating containing carbon particles;
Fig. 7 is a waveform diagram showing a temperature determined with an ordinary insulation coating containing no carbon particle;
Fig. 8 is a waveform diagram showing a temperature determined with an insulation coating containing carbon particles;
Fig. 9 shows a relation between the temperature of molten steel and the temperature measured using a double-covered optical fiber with an ordinary insulation coating containing no carbon particle; and
Fig. 10 shows a relation between the temperature of molten steel and the temperature measured using a double-covered optical fiber with an insulation coating containing carbon particles.

### DESCRIPTION OF THE EMBODIMENT

A double-covered optical fiber of the present invention has a protective tube on the optical fiber, and further has an insulation coating covering the protective tube. The insulation coating contains particles having a melting point higher than the temperature of a target material. The particles of high melting point use carbon particles.

For example, carbon (graphite) is an element of the highest melting point of more than 3,500 °C. When an insulation material containing the carbon particles as the additive is immersed into a molten metal, the carbon particles do not burn because they can not receive oxygen and leave a charcoal layer on the protective tube after the insulation material melted out in the molten metal. The remained charcoal layer gives an insulation effect to suppress the melt-loss of the protective tube. In addition, a metal having a high temperature durability supports to maintain the flexural strength of the optical fiber.

In this way, an insulation coating containing particles as the additive having a temperature of melting point higher than the temperature of the target material reduces the consumption of the optical fiber and maintains the strength of the protective tube, which enables to determine the temperature inside of (deep in) the molten metal.

Also merely as an example, when an insulation material composing of cellulose is immersed into a molten metal, the heat-receiving condition without accompanying oxidation is established. As a result, a carbon structure is left after the melting-out of the insulation material to remain on the surface of the protective tube as charcoal. The charcoal gives an effect of heat insulation to suppress the damage of the protective tube. In addition, a metal having a high temperature durability supports to maintain the flexural strength of the optical fiber.

Following the procedure, the insulation coating comprising cellulose component reduces the consumption of the optical fiber and maintains the strength of the protective tube to enable the measurement of inside of (deep into) the molten metal.

### Example 1

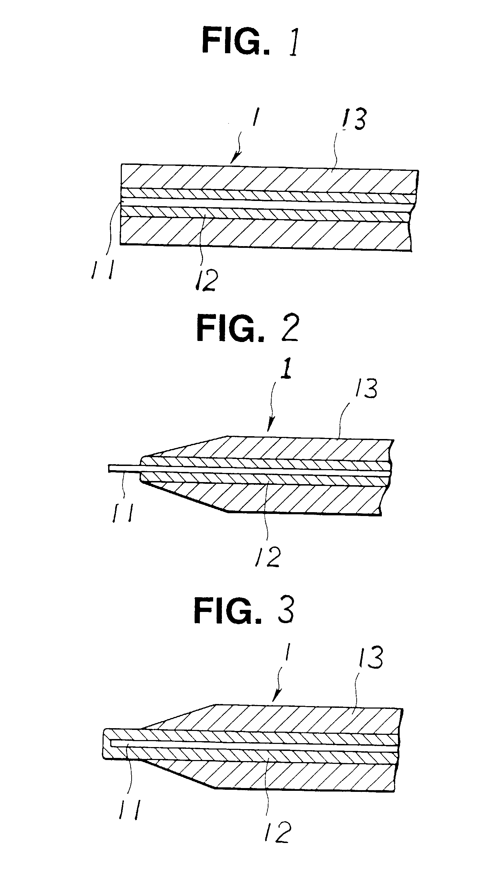

Fig. 1 shows a cross section of a fiber of Example 1 of the present invention. The reference number 1 designates the double-covered optical fiber. The double-covered optical fiber comprises an optical fiber 11, a protective tube 12 for covering the optical fiber 11, and a insulating coating 13 for covering the surface of the protective tube 12. The optical fiber 11 is a GI fiber ( GRADED-INDEX MULTIMODE FIBER ) made of a quartz glass. The optical fiber 11 has an inner diameter of 50 µm and an outer diameter of 125 µ m and is coated with polyimide. The optical fiber which has the inner diameter of 50 µ m and the outer diameter of 125 µ m is abbreviated as " a 50/125 optical fiber". The protective tube 12 is made of stainless steel having 1.4 mm of outer diameter and 1 mm of inner diameter. The insulation coating 13 is made from polyethylene resin containing carbon particles as the additive at a rate of approximately 3%.

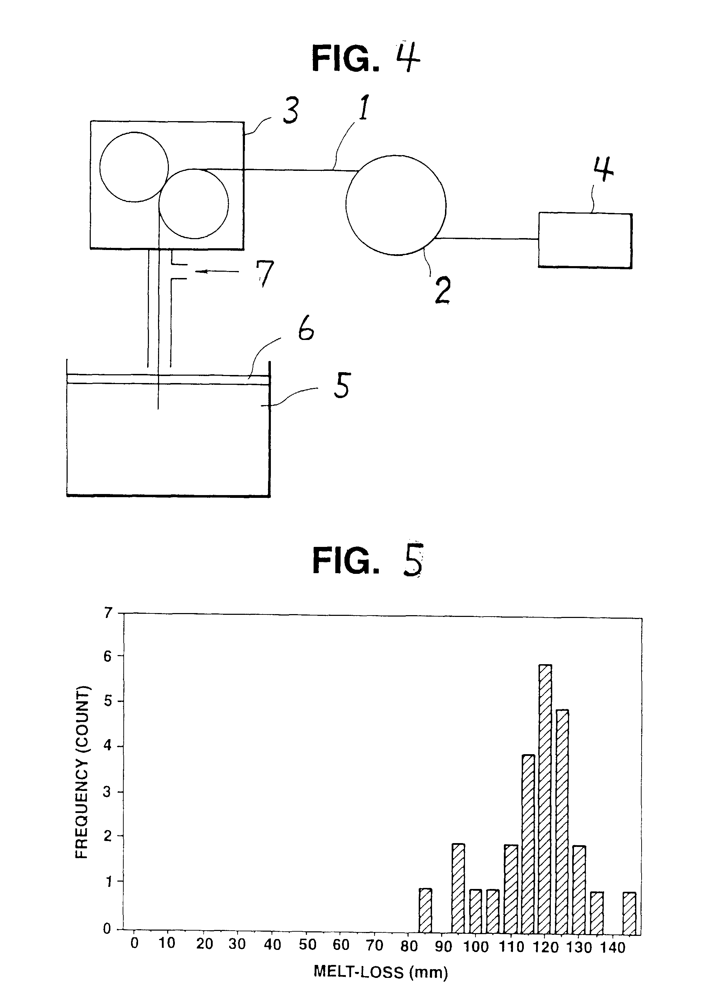

For example, as illustrated in Fig. 4, a temperature measuring device to determine the temperature of the molten steel is structured by a double-covered optical fiber 1 which is coiled around a feed drum 2 and which is used as both the light guide and the temperature measuring element, an optical fiber transfer means 3, and a signal processor 4. Purging with an inert gas 7 is applied surrounding the double-covered optical fiber near to the molten steel surface to perform a maximum effect of the heat-resistant covering of the optical fiber 1 and to prevent burning the cover material.

With the temperature measuring device having the above-described structure, the temperature of a molten steel is determined. When the tip of double-covered optical fiber 1 is immersed into the molten steel 5 through the powder 6, the insulation coating 13 melts during the tip of double-covered optical fiber 1 passes through the powder 6 while leaving a charcoal layer on the surface of the protective tube 12 because the optical fiber 11 is covered with a protective tube 12 made of stainless steel and with an insulation coating 13 consisting of polyethylene containing carbon particles as the additive at a rate of approximately 3%. The remained charcoal layer gives an effect of heat insulation to protect the protective tube 12 from heat, so the optical fiber 11 is possible to immerse into the molten steel 5 stably.

On the contrary, in the case of insulation coating made from ordinary polyethylene which contains no carbon particle, the insulation coating melts out on passing through the powder to expose the protective tube 12. As a result, compared with the case of the present invention using an insulation coating 13 made from polyethylene containing carbon particles as the additive, the speed of melting the protective tube is high, and that type of optical fiber 11 cannot immerse stably into a sufficient depth. This is because the protective tube degraded its flexural strength cannot endure the pressure of the molten steel 5 and can not immerse into the molten steel 5, and because the amount of melt-loss is excessive even when the optical fiber 11 is immersed into the molten steel 5.

When a double-covered optical fiber 1 using an insulation coating 13 containing carbon particles as the additive is immersed into the molten steel at 1500 °C or more, the temperature of the tip of double-covered optical fiber 1 shows a sudden rise, and the insulation coating 13 at the tip is melted out to leave a thin charcoal layer on the surface of the protective tube 12. Since the protective tube 12 is formed by a stainless steel having a melting point in an approximate range from 1400 to 1430 °C, the area where is not insulated by the charcoal insulation layer receives heat to gradually melt from the tip, and the optical fiber 11 gradually exposes from the tip as shown in the cross section in Fig. 2.

The tip of the exposed optical fiber 11 immediately receives the light depending on the temperature of molten steel 5. The incident light is sent to the signal processor 4 via the double-covered optical fiber 11 and is converted to temperature.

When an insulation coating 13 containing carbon particles as the additive is used, there appears a time lag between the time of immersing the tip of double-covered optical fiber 1 into the molten steel 5 and the time of melting the protective tube 12 until the optical fiber 11 exposes. So the tip of optical fiber 11 is secured at a specified depth in the molten steel 5. Since the optical fiber 11 is made from a quartz glass having a softening point at approximately 1600 °C which is more than the temperature of the molten steel 5, the optical fiber 11 maintains the original shape for a certain period even after it is exposed. Therefore, the internal temperature of the molten steel 5 can be determined promptly and accurately.

After the measurement, the double-covered optical fiber 1 is drawn out from the molten steel 5. The tip of protective tube 12 is melted to cover the tip of optical fiber 11, which is shown in Fig. 3. In such a manner, the protective tube 12 and the insulation coating 13 are remained at the tip of double-covered optical fiber 1, and the protective tube 12 covers and protects the tip of optical fiber 11. Accordingly, the optical fiber 11 can be immersed deep into the molten steel 5 at next measuring cycle.

An example is referred to observe the state of the tip of double-covered optical fiber 1 on measuring the temperature of molten steel 5. As mentioned above, the double-covered optical fiber comprises an optical fiber 11, a protective tube 12 for covering the optical fiber 11, and an insulating coating 13 for covering the surface of the protective tube 12. The optical fiber 11 is a GI fiber ( GRADED-INDEX MULTIMODE FIBER ) made of a quartz glass. The optical fiber 11 has an inner diameter of 50 µ m and an outer diameter of 125 µ m and is coated with polyimide. The protective tube 12 is made of stainless steel having 1.4 mm of outer diameter and 1 mm of inner diameter. The insulation coating 13 is made from polyethylene resin containing carbon particles as the additive at a rate of approximately 3%.

The tip of double-covered optical fiber 1 was immersed into a molten steel 5 at 1550 °C to a depth of approximately 200 mm to hold it there for 1 sec. The measurement was repeated intermittently. In every measurement, the shape of the tip of double-covered optical fiber 1 was observed to find that the tip immersed into the molten steel 5 to a depth of approximately 200 mm became a shape as shown in Fig. 3, while leaving approximately 160 mm long tip. During 1 sec. of measurement, it was found that the tip of double-covered optical fiber 1 lost about 40 mm long, but the tip was held in the molten steel 5, not in the powder 6 above the molten steel, and that the inside temperature of the molten steel 5 was measured.

Next, to clarify an effect of the present invention, the double-covered optical fiber 1 of this invention using an insulation coating 13 composing polyethylene containing about 3% of carbon particles as the additive was compared with the double-covered optical fiber using an insulation coating composing ordinary polyethylene containing no carbon particle.

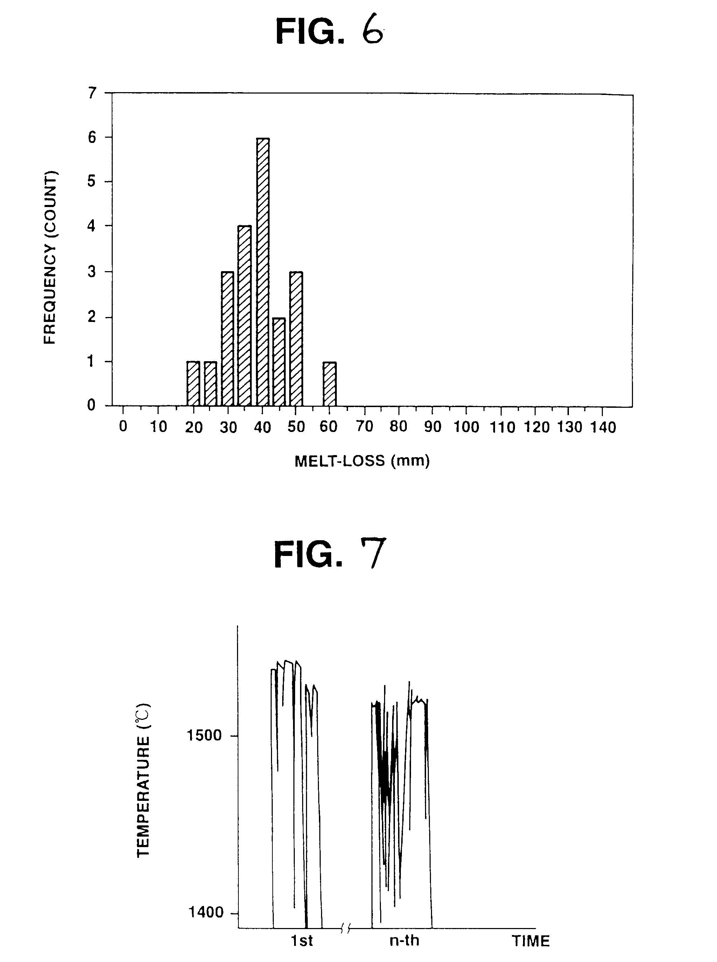

Fig. 5 and Fig. 6 show the melt-loss of the optical fiber when the tip of double-covered optical fiber was repeatedly immersed into the molten steel 5 at 1550 °C to a depth of 200 mm to hold it there for 1 sec. Fig. 5 indicates the melt-loss in the case of the insulation coating of ordinary polyethylene without containing carbon particle additive. Fig. 6 shows the melt-loss in the case of the insulation coating polyethylene containing approximately 3% of carbon particles as the additive.

The melt-loss of the case using an insulation coating of ordinary polyethylene containing no carbon particle was approximately 120 mm. The melt-loss of the case using an insulation coating of polyethylene containing carbon particles at approximately 3% as the additive was approximately 40 mm, which showed a significant difference in each of the cases. The comparison confirmed the superiority of the polyethylene containing carbon particles as the additive.

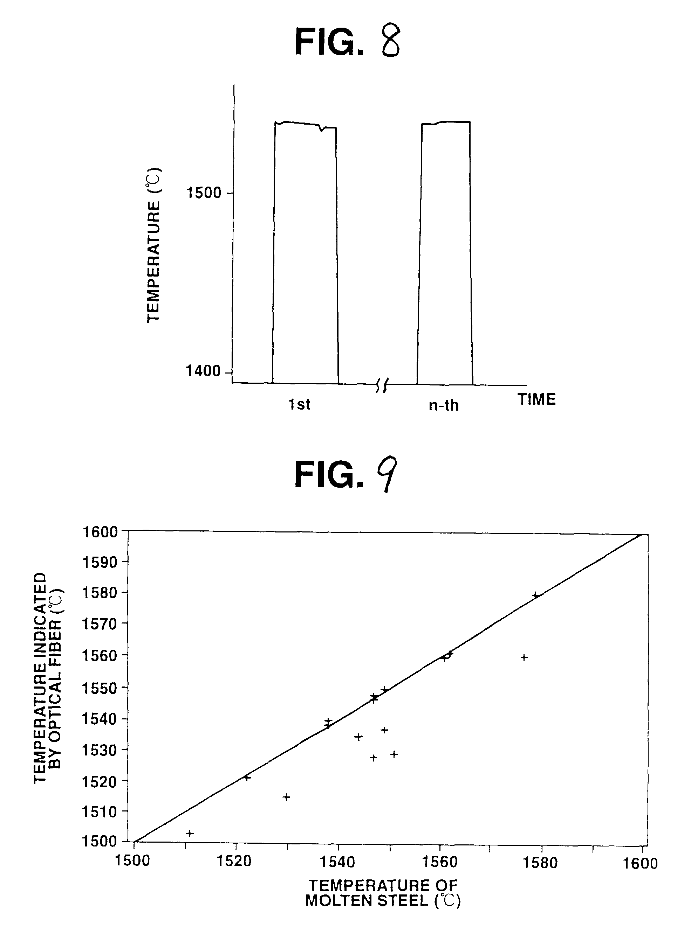

Fig. 7 and Fig. 8 show the observed waveform when the tip of double-covered optical fiber was repeatedly immersed into the molten steel 5 to a depth of approximately 200 mm and held it at the place for 1 sec. Fig. 7 is drawn in the case of the insulation coating of ordinary polyethylene without containing carbon particle additive. Fig. 8 shows the melt-loss in the case of the insulation coating of polyethylene containing approximately 3% of carbon particles as the additive. In Fig. 7, there observed several times of sudden decrease of measured value. The phenomenon indicates the temperature change occurred at the time of melting out of the tip of exposed optical fiber to expose a new tip portion. On the other hand, Fig. 8 shows a stable plateau, which indicates that the optical fiber 11 was well protected and that the measurement was conducted at a stable position.

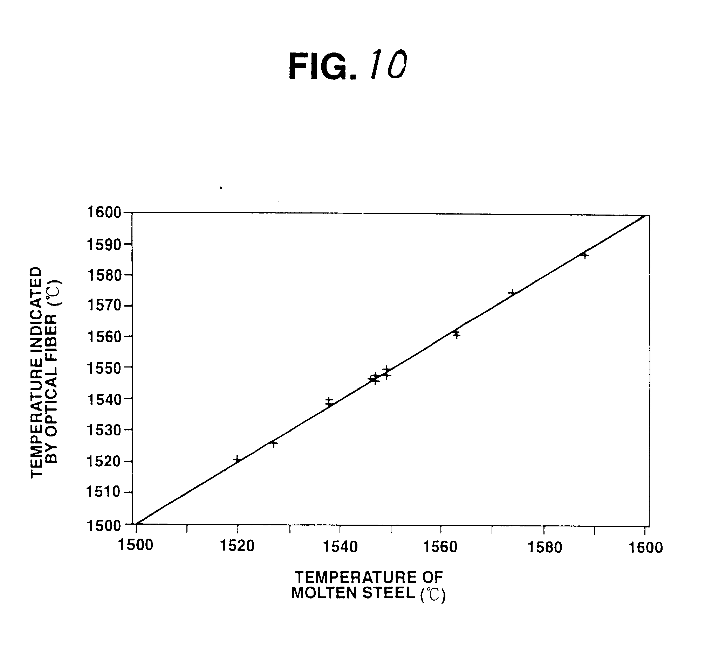

Then, the tip of double-covered optical fiber was immersed into the molten steel 5 which was varied its temperature in a range from 1500 to 1600 °C to a depth of approximately 200 mm to hold there for 1 sec. The intermittently repeated measurement was carried out, and the results are given in Fig. 9 and Fig. 10. Fig. 9 is drawn in the case of the insulation coating of ordinary polyethylene result containing carbon particle additive. Fig. 10 shows the result in the case of the insulation coating polyethylene containing approximately 3% of carbon particles as the additive.

Referring to Fig. 9, there often appeared a temperature indication lower than the actual molten steel by nearly 20 °C. The presumed cause of the phenomenon is that the tip of double-covered optical fiber 1 lost its insulation coating before reaching to a sufficient depth during the process of immersing the double-covered optical fiber 1 into the molten steel 5 and that the protective tube 12 was directly exposed to the molten steel 5 to lose its strength and that the tip could not reach a sufficient depth and the correct temperature of molten steel 5 was not able to be measured.

To the contrary, in the case of using an insulation coating 13 comprising polyethylene containing carbon particles as the additive, which is shown in Fig. 10, there attained nearly completely stable measurement of correct temperature.

With the above temperature measurement results, the superiority of the insulation containing carbon particles as the additive was confirmed.

The above example uses the insulation coating comprising polyethylene containing carbon particles at about 3% as the additive. Nevertheless, an insulation coating of polyethylene containing carbon particles at about 5% gives similar effect with the 3% case. If the bending characteristics of the optical fiber on coiling around the drum is not required to consider, the content of the carbon particles may be increased further.

### Example 2

Example 2 used a heat-shrink tube made of polyethylene containing carbon particles as the additive as an insulation coating of the double-covered optical fiber. The following is the description of the structure of double-covered optical fiber of Example 2.

The double-coated optical fiber comprised a 50/125 optical fiber 11 made of GI fiber of a quartz glass coated with polyimide, a protective tube 12 made of stainless steel having 1.4 mm of outer diameter and 1 mm of inner diameter covering the optical fiber 11, and a heat-shrink tube made from polyethylene resin containing carbon particles as the additive covering the surface of the protective tube 12 to form the double-covered optical fiber with outside diameter of approximately 4 mm.

The tip of double-covered optical fiber was immersed into a molten steel at a temperature ranging from 1400 to 1600°C to a depth of approximately 200 mm to hold it there for 1 sec. The measurement was repeated intermittently. In every measurement, the shape of the tip of double-covered optical fiber was observed to find that a tip having a shape similar to Fig. 3 remained and that the melt-loss at the tip of double-covered optical fiber was approximately 30 mm, which was similar effect with the case using an insulation coating of polyethylene containing approximately 3% of carbon particles and that the tip was immersed to a sufficient depth to determine correct temperature of the molten steel using a temperature measuring device employing the double-covered optical fiber.

From the above results, also with a double-covered optical fiber using an insulation coating of polyethylene heat shrink tube, it was confirmed that the temperature of molten steel at a sufficient depth can be measured with a reduced consumption of the optical fiber in every measurement.

### Example 3

Examples 1 and 2 dealt with an optical fiber 11 made from quartz glass and a protective tube 12 made of stainless steel to measure a temperature of molten steel at approximately 1500 °C. However, a temperature at around 1000°C could be measured by using an optical fiber made from multi-component glass having a softening point of 1000 °C or below covered with an insulation coating containing carbon particles as the additive.

### Example 4

Example 4 used an optical fiber covered with a metallic tube, which was further covered with a paper tape winding thereon. The structure of the double-covered optical fiber was a 50/125 optical fiber 11 consisting of a GI fiber of quartz glass coated by polyimide, a protective tube 12 which had 1.4 mm of outer diameter and 1 mm of inner diameter and which was made of stainless steel to cover the optical fiber 11, a paper tape as the insulation coating wound around the protective tube 12.

The prepared double-covered optical fiber was immersed into the molten steel at a temperature of 1400 to 1600°C to a depth of 200 mm, and the state of the tip of double-covered optical fiber was observed. The portion immersed into the molten steel left soot-like charcoal on the surface of the metallic tube, and approximately 50 mm length at the tip was melted out. In the case that an optical fiber covered with a metallic tube without using an insulation coating was immersed into the molten steel, nearly all the portion immersed into the molten steel was melted out.

From the observation described above, it was confirmed that a double-covered optical fiber using an insulation coating consisting of cellulose performed the measurement of temperature at a sufficiently deep zone of a molten metal with a reduced amount of melt-loss in every measurement cycle.

As described in detail above, since the double-covered optical fiber of the present invention employs a metallic protective tube on the optical fiber and an insulation coating containing carbon particles as an additive having a melting point higher than the temperature of target material, the double-covered optical fiber gives a reduced amount of melt-loss to decrease the cost of measurement even when it is applied to a molten metal system.

Also since the metallic protective tube has a sufficient strength, the double-covered optical fiber of the present invention allows to measure a temperature at a deep zone in the molten metal for determining a correct temperature.

## Claims

1. A temperature measuring device comprising:
(a) an optical fiber (11);
(b) a metallic protective tube (12) for covering the optical fiber; and
(c) a heat insulation coating (13) for covering the protective tube, the optical fiber being covered with the protective tube and the heat insulation coating to form a double-covered optical fiber, and a tip of the double-covered optical fiber being a temperature measuring element;
**characterized in that**
(d) said heat insulation coating contains carbon particles as an additive having a melting point higher than a temperature of a molten metal being measured.

2. The temperature measuring device of Claim 1, wherein said optical fiber is a optical fiber made from a quartz glass.

3. The temperature measuring device of Claim 1, wherein said metallic protective tube is a stainless steel tube.

4. The temperature measuring device of Claim 1, wherein said heat insulation coating is a polyethylene coating containing carbon particles as an additive.

5. The temperature measuring device of Claim 1, wherein said heat insulation coating is a polyethylene tube containing carbon particles as an additive, the polyethylene tube having a thermal shrinkage property.

## Patentansprüche

1. Vorrichtung zum Temperaturmessen, umfassend:
(a) eine optische Faser (11);
(b) ein metallisches Schutzrohr (12) zum Umhüllen der optischen Faser; und
(c) eine Wärmeisolierschicht (13) zum Umhüllen des Schutzrohres, wobei die optische Faser von dem Schutzrohr und der Wärmeisolierschicht umhüllt ist, um eine doppelt umhüllte optische Faser zu bilden, und wobei eine Spitze der doppelt umhüllten optischen Faser ein Temperaturmeßelement ist,
**dadurch gekennzeichnet**, daß
(d) die Wärmeisolierschicht Kohlenstoffpartikel als ein Zusatzstoff mit einem höheren Schmelzpunkt als die Temperatur eines gemessenen geschmolzenen Metalls enthält.

2. Vorrichtung zum Temperaturmessen gemäß Anspruch 1, worin die optische Faser eine aus Quartzglas hergestellte optische Faser ist.

3. Vorrichtung zum Temperaturmessen gemäß Anspruch 1, worin das metallische Schutzrohr ein Rohr aus rostfreiem Stahl ist.

4. Vorrichtung zum Temperaturmessen gemäß Anspruch 1, worin die Wärmeisolierschicht eine Kohlenstoffpartikel als einen Zusatzstoff enthaltende Polyethylenschicht ist.

5. Vorrichtung zum Temperaturmessen gemäß Anspruch 1, worin die Wärmeisolierschicht eine Kohlenstoffpartikel als einen Zusatzstoff enthaltendes Polyethylenrohr ist und das Polyethylenrohr thermische Schrumpfeigenschaften aufweist.

## Revendications

1. Dispositif de mesure de température comprenant :
(a) une fibre optique (11) ;
(b) un tube protecteur métallique (12) pour recouvrir la fibre optique ; et
(c) un revêtement isolant de la chaleur (13) pour recouvrir le tube protecteur, la fibre optique étant recouverte du tube protecteur, et du revêtement d'isolement thermique pour former une fibre optique à double revêtement, et une pointe de la fibre optique à double revêtement constituant un élément de mesure de la température ;
caractérisé en ce que
(d) ledit revêtement d'isolement de la chaleur contient des particules de carbone comme additif ayant un point de fusion supérieur à une température mesurée d'un métal fondu.

2. Dispositif de mesure de la température selon la revendication 1, où ladite fibre optique est une fibre optique en verre de quartz.

3. Dispositif de mesure de la température selon la revendication 1, où ledit tube protecteur métallique est un tube en acier inoxydable.

4. Dispositif de mesure de la température selon la revendication 1, où ledit revêtement d'isolement de la chaleur est un revêtement en polyéthylène contenant des particules de carbone comme additif.

5. Dispositif de mesure de la température selon la revendication 1, où ledit revêtement d'isolement de la chaleur est un tube de carbone comme additif, le tube de polyéthylène ayant des propriétés de rétractation thermique.
